# EUROPEAN PATENT APPLICATION

(11) **EP 3 734 713 A1**
(43) Date of publication of application: **04.11.2020**
(21) Application number: 18895841.7
(22) Date of filing: 21.12.2018
(51) Int. Cl.: H01M 4/13, H01M 2/34, H01M 4/139, H01M 10/058

(54) **LAMINATED BODY FOR NONAQUEOUS SECONDARY BATTERY, METHOD FOR MANUFACTURING SAME, AND NONAQUEOUS SECONDARY BATTERY**

(30) Priority: 28.12.2017 JP 2017254050
(71) Applicant: Zeon Corporation, Tokyo 100-8246 (JP)
(72) Inventor: KOGA Hiroshi, Tokyo 100-8246 (JP)
(74) Representative: Hansen, Norbert
(86) International application number: PCT/JP2018/047306
(87) International publication number: WO 2019/131531

(57) **Abstract**

Disclosed is laminate for a non-aqueous secondary battery which may be prevented from undergoing blocking. The laminate comprises a non-porous substrate layer, and an adhesive layer formed on a surface on one side of the substrate layer, wherein a surface roughness of the surface on the one side of the substrate layer is greater than a surface roughness of a surface on the other side of the substrate layer. Preferably, the surface roughness of the surface on the one side of the substrate layer is 0.20 µm or more and 2.00 µm or less. Preferably, the surface roughness of the surface on the other side of the substrate layer is 0.01 µm or more and 0.15 µm or less.

## Description

### TECHNICAL FIELD

The present disclosure relates to a laminate for a non-aqueous secondary battery, a method of manufacturing the same, and a non-aqueous secondary battery. In particular, the present disclosure relates to a laminate for a non-aqueous secondary battery having an adhesive layer, a method of manufacturing the same, and a non-aqueous secondary battery which includes the same.

### BACKGROUND

Non-aqueous secondary batteries (hereinafter, also referred to simply as "secondary batteries") such as lithium ion secondary batteries have characteristics such as compact size, light weight, high energy density, and an ability to be repeatedly charged and discharged, finding a wide variety of applications. A secondary battery generally includes battery members, such as a positive electrode, a negative electrode, and a separator that separates the positive and negative electrodes from each other to prevent a short circuit between the positive and negative electrodes.

In recent years, for secondary batteries, battery members have been used that have an adhesive layer for improving the adhesion between battery members.

Specific examples of such battery members include electrodes which further include an adhesive layer formed on an electrode substrate formed of a current collector and of an electrode mixed material layer formed on the current collector; and separators which include an adhesive layer formed on a separator substrate. One proposed method of forming an adhesive layer on an electrode or separator substrate involves preparing a laminate which includes an adhesive layer formed on a releasable substrate and transferring the adhesive layer formed on the releasable substrate to the electrode or separator substrate (see, e.g., PTL 1).

Further, from the viewpoint of enhancing the safety of secondary batteries, PTL 2 and other literatures propose techniques of preventing a short-circuit between the electrodes by disposing a laminate, which has a resin film substrate and an adhesive layer formed on the substrate, in a location where a portion of the positive electrode current collector not coated with the electrode mixed material layer (positive electrode mixed material layer) is opposed to the electrode mixed material layer (negative electrode mixed material layer) formed on the negative electrode current collector.

### CITATION LIST

### Patent Literature

PTL 1: WO2016031163A
PTL 2: JP5925690B

### SUMMARY

### (Technical Problem)

Laminates for use in secondary batteries, which include a substrate and an adhesive layer formed on the substrate, may be rolled or stacked for storage and transportation.

However, when the above-described conventional laminates which include an adhesive layer formed on a substrate are stored and transported in such conditions, portions of the substrate which are adjacent to each other via the adhesive layer may be adhered to each other, i.e., undergo blocking, leading to defects or productivity reduction.

An object of the present disclosure is therefore to provide a laminate for a non-aqueous secondary battery which may be prevented from undergoing blocking and a method of manufacturing the same.

Another object of the present disclosure is to provide a non-aqueous secondary battery which includes a laminate for a non-aqueous secondary battery which may be prevented from undergoing blocking.

### (Solution to Problem)

The inventor conducted diligent investigation with the aim of solving the problem set forth above. The inventor found that a laminate for a non-aqueous secondary battery which may be prevented from undergoing blocking can be obtained by forming an adhesive layer on a substrate layer having a predetermined property and thus completed the present disclosure.

Specifically, the present disclosure aims at advantageously solving the problem set forth above, and a disclosed laminate for a non-aqueous secondary battery comprises: a non-porous substrate layer; and an adhesive layer formed on a surface on one side of the substrate layer, wherein a surface roughness of the surface on the one side of the substrate layer is greater than a surface roughness of a surface on the other side of the substrate layer. When the adhesive layer is formed on the surface having a large surface roughness in this manner, blocking can be prevented even when the laminate is stored and transported in a rolled or stacked state.

"Surface roughness" as used herein refers to an arithmetic average roughness Ra obtained in accordance with JIS B0601 (1994).

In the disclosed laminate for a non-aqueous secondary battery, it is preferred that the surface roughness of the surface on the one side of the substrate layer is 0.20 µm or more and 2.00 µm or less. When the surface of the substrate layer on which the adhesive layer is to be formed has a surface roughness that falls within the range described above, it is possible to more effectively prevent blocking as well as to increase the transferability of the adhesive layer when transferring the adhesive layer from the laminate to an electrode substrate or a separator substrate.

In the disclosed laminate for a non-aqueous secondary battery, it is preferred that the surface roughness of the surface on the other side of the substrate layer is 0.01 µm or more and 0.15 µm or less. When the surface roughness of the surface on the other side of the substrate layer falls within the range described above, the substrate layer can be easily prepared, and blocking can be more effectively prevented.

In the disclosed laminate for a non-aqueous secondary battery, it is preferred that the adhesive layer comprises organic particles, and that the organic particles are made of a polymer which comprises 1% by mass or more and 70% by mass or less of a nitrile group-containing monomer unit. When the adhesive layer comprises organic particles made of a polymer which comprises 1% by mass or more and 70% by mass or less of a nitrile group-containing monomer unit, the transferability of the adhesive layer when it is transferred from the laminate to an electrode substrate or a separator substrate can be increased while ensuring a sufficient adhesion strength of the adhesive layer to the substrate layer.

In the disclosed laminate for a non-aqueous secondary battery, it is preferred that the adhesive layer has a thickness of 0.01 µm or more and 10.0 µm or less. When the thickness of the adhesive layer falls within the range described above, it is possible to more effectively prevent blocking while ensuring a sufficient adhesion strength of the adhesive layer to the substrate layer.

The present disclosure aims at advantageously solving the problem set forth above, and a disclosed non-aqueous secondary battery comprises a structure wherein a positive electrode which includes a positive electrode current collector and a positive electrode mixed material layer formed on a part of the positive electrode current collector and a negative electrode which includes a negative electrode current collector and a negative electrode mixed material layer formed on the negative electrode current collector are disposed such that the positive electrode mixed material layer and the negative electrode mixed material layer are opposed to each other via a separator and such that an opposing portion where a portion of the positive electrode current collector, which portion is free of the positive electrode mixed material layer, and the negative electrode mixed material layer are opposed to each other is present, wherein any of the laminates for a non-aqueous secondary battery described above is disposed in the opposing portion. By disposing the laminate in such an opposing portion as described above, the safety of a non-aqueous secondary battery can be enhanced.

The present disclosure aims at advantageously solving the problem set forth above, and a disclosed method of manufacturing a laminate for a non-aqueous secondary battery is a method of manufacturing a laminate for a non-aqueous secondary battery, the laminate including a non-porous substrate layer and an adhesive layer formed on a surface on one side of the substrate layer, wherein a surface roughness of the surface on the one side of the substrate layer is greater than a surface roughness of a surface on the other side of the substrate layer, and the method comprises a step of forming the adhesive layer on the surface on the one side of the substrate layer. When the adhesive layer is formed on the surface having a large surface roughness as described above, blocking can be prevented even when the obtained laminate for a non-aqueous secondary battery is stored and transported in a rolled or stacked state.

In the disclosed method of manufacturing a laminate for a non-aqueous secondary battery, it is preferred that the step includes applying an adhesive layer composition on the surface on the one side of the substrate layer and drying the adhesive layer composition to form an adhesive layer. When the adhesive layer is formed by applying and drying an adhesive layer composition as described above, it is possible to easily obtain a laminate for a non-aqueous secondary battery.

### (Advantageous Effect)

According to the present disclosure, it is possible to provide a laminate for a non-aqueous secondary battery which may be prevented from undergoing blocking, and a non-aqueous secondary battery which includes the laminate for a non-aqueous secondary battery.

### BRIEF DESCRIPTION OF THE DRAWINGS

In the accompanying drawings:
FIG. 1 is side view of an example of a laminate for a non-aqueous secondary battery according to the present disclosure;
FIG. 2A is an exploded perspective view of an example of a structure comprised in a laminate for a non-aqueous secondary battery according to the present disclosure; and
FIG. 2B is a cross-sectional view of the structure cut along its thickness.

### DETAILED DESCRIPTION

The following provides a detailed description of an embodiment of the present disclosure.

The disclosed laminate for a non-aqueous secondary battery can be manufactured for example using the disclosed method of manufacturing a laminate for a non-aqueous secondary battery. Applications of the disclosed laminate for a non-aqueous secondary battery are not particularly limited. For example, the disclosed laminate for a non-aqueous secondary battery can be used to form an adhesive layer on a substrate such as an electrode substrate or a separator substrate by transfer methods. Further, for the purpose of increasing the safety of a non-aqueous secondary battery, the disclosed laminate for a non-aqueous secondary battery can be disposed in an opposing portion where a portion of a positive electrode current collector, free of a positive electrode mixed material layer, and a negative electrode mixed material layer are opposed to each other. Moreover, the disclosed laminate for a non-aqueous secondary battery can be used to remove, with its adhesive layer, stains and the like attached to manufacturing equipment of non-aqueous secondary batteries, such as rolls.

### (Laminate for Non-Aqueous Secondary Battery)

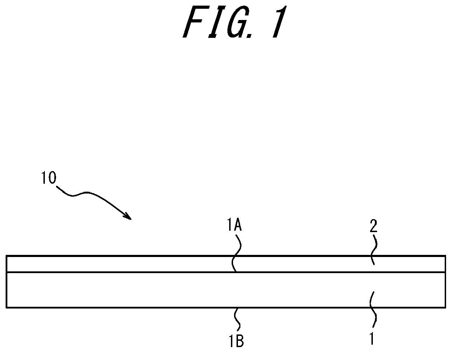

The disclosed laminate for a non-aqueous secondary battery has a non-porous substrate layer 1 and an adhesive layer 2 formed on a surface 1A on one side (upper side in FIG. 1) of the substrate layer 1, as shown in FIG. 1 which illustrates one exemplary structure of the laminate. A laminate 10 for a non-aqueous secondary battery requires that the surface roughness of the surface 1A on one side of the substrate layer 1 be greater than the surface roughness of a surface 1B on the other side (lower side in FIG. 1) of the substrate layer 1.

Although the adhesive layer 2 is provided on the entire surface of the surface 1A on one side of the substrate layer 1 in FIG. 1, the adhesive layer 2 may be provided on only a portion of the surface 1A on one side of the substrate layer 1. When the adhesive layer 2 is provided on only a portion of the surface 1A on one side of the substrate layer 1, an adhesive layer may be provided on a portion of the surface 1B on the other side of the substrate layer 1, which portion is opposed to a portion of the surface 1A which is free of the adhesive layer 2.

The disclosed laminate for a non-aqueous secondary battery can be prevented from undergoing blocking (i.e., shows excellent blocking resistance) even when it is stored and transported in a rolled or stacked state.

It is not clear why blocking can be prevented with the disclosed laminate, but a possible reason would be that when the laminate is in a rolled or stacked state, the surface on the other side having a smaller surface roughness than the surface on the one side is brought in contact with the surface of the adhesive layer, and an adhesion strength to the adhesive layer is larger for the surface on the one side having a higher surface roughness than for the surface on the other side having a smaller surface roughness.

### <Substrate Layer>

The substrate layer is a non-porous layer whose surface on one side has a greater surface roughness than the surface on the other side.

The surface roughness of the surface on the one side of the substrate layer (the surface on which an adhesive layer is to be provided) is not particularly limited as long as it is greater than the surface roughness of the surface on the other side of the substrate layer and is preferably 0.20 µm or more, and more preferably 0.35 µm or more, but preferably 2.00 µm or less, and more preferably 1.00 µm or less. When the surface roughness of the surface on the one side of the substrate layer is not less than the above-described lower limit, it is possible to further increase the blocking resistance of the laminate for a non-aqueous secondary battery. When the surface roughness of the surface on the one side of the substrate layer is not greater than the above-described upper limit, it is possible to increase the transferability of the adhesive layer when it is transferred from the laminate for a non-aqueous secondary battery to an electrode substrate, a separator substrate or the like.

The surface roughness of the surface on the other side of the substrate layer is not particularly limited as long as it is smaller than the surface roughness of the surface on the one side of the substrate layer and is preferably 0.01 µm or more, but preferably 0.15 µm or less, and more preferably 0.10 µm or less, for example. When the surface roughness of the surface on the other side of the substrate layer is not less than the above-described lower limit, there is no need to excessively smoothen the surface of the substrate layer, so that the substrate layer can be easily prepared. When the surface roughness of the surface on the other side of the substrate layer is not greater than the above-described upper limit, it is possible to further increase the blocking resistance of the laminate for a non-aqueous secondary battery.

The surface roughness of surfaces of the substrate layer can be adjusted by any processing methods known in the art, such as matting, blasting, embossing, and polishing. Surface roughness can also be adjusted using any surface treatment methods known in the art, such as corona treatment and plasma treatment.

The substrate layer is not particularly limited, and, for example, a resin film can be used.

The resin for the resin film which can be used as the substrate layer is not particularly limited, and examples thereof include polypropylene (PP), polyethylene terephthalate (PET), polyethylene (PE), polyimide (PI), and polyamide (PA). The resin film may be a multi-layer film made of any of the resins described above. Among them, the resin film is preferably a polypropylene film, and more preferably a biaxially oriented polypropylene (OPP) film.

When the resin forming the resin film has a melting point, the melting point is preferably higher than the glass transition temperature of the polymer contained in the adhesive layer described later, preferably at least 50°C higher than the glass transition temperature of the polymer contained in the adhesive layer, but preferably 250°C or lower. When the melting point of the resin forming the resin film is higher than the glass transition temperature of the polymer contained in the adhesive layer, it is possible to prevent the formation of holes in the substrate layer for example when the laminate for a non-aqueous secondary battery is heated to allow the adhesive layer to exert a sufficient adhesion strength. When the melting point of the resin is 250°C or lower, the adhesion between the substrate layer and the adhesive layer can be sufficiently increased.

For the same reason, the glass transition temperature of the resin forming the resin film is preferably higher than the glass transition temperature of the polymer contained in the adhesive layer, preferably at least 50°C higher than the glass transition temperature of the polymer contained in the adhesive layer, but preferably 250°C or lower.

"Melting point" herein can be measured in accordance with JIS K7121. "Glass transition temperature" herein can be measured in accordance with JIS K7121.

The thickness of the substrate layer is preferably 100 µm or less, and more preferably 40 µm or less, but preferably 10 µm or more. When the thickness of the substrate layer is not less than the above-mentioned lower limit, the strength of the substrate layer can be sufficiently ensured. When the thickness of the substrate layer is not greater than the above-described upper limit, it is possible to prevent a portion where the laminate for a non-aqueous secondary battery has been disposed from being upwardly raised for example when the laminate is disposed in an opposing portion where a portion of a positive electrode current collector, free of a positive electrode mixed material layer, and a negative electrode mixed material layer are opposed to each other.

### <Adhesive Layer>

The adhesive layer to be provided on the surface on the one side of the substrate layer is not particularly limited, and any adhesive layer that can be used in the field of non-aqueous secondary batteries can be used. Specifically, it is possible to use those described for example in JP2017098203A, JP2017084651A, JP2016100149A, JP2016081888A, JP2015041603A, WO2015064411A, and WO2016031163A.

Preferred among the foregoing adhesive layers is an adhesive layer containing organic particles made of a polymer, and more preferably an adhesive layer containing organic particles and a binder made of a polymer which is different from the polymer of the organic particles.

It is preferred to use organic particles made of a polymer which comprises 1% by mass or more and 70% by mass or less of a nitrile group-containing monomer unit. The proportion of the nitrile group-containing monomer unit in the polymer forming the organic particles is preferably 5% by mass or more, and more preferably 10% by mass or more, but preferably 30% by mass or less, and more preferably 20% by mass or less. When the proportion of the nitrile group-containing monomer unit is not less than the above-mentioned lower limit, it is possible to sufficiently increase the adhesion between the substrate layer and the adhesive layer. When the proportion of the nitrile group-containing monomer unit is not greater than the above-described upper limit, the transferability of the adhesive layer when it is transferred from the laminate for a non-aqueous secondary battery to an electrode substrate, a separator substrate or the like can be increased.

Examples of nitrile group-containing monomers which may form the nitrile group containing-monomer unit include (meta)acrylonitrile monomers such as acrylonitrile and methacrylonitrile.

Examples of monomers which may form monomer units other than the nitrile group-containing monomer unit in the polymer forming the organic particles include vinyl chloride-based monomers such as vinyl chloride and vinylidene chloride; vinyl acetate-based monomers such as vinyl acetate; aromatic vinyl monomers such as styrene, α-methylstyrene, styrene sulfonic acid, butoxystyrene, and vinylnaphthalene; vinyl amine-based monomers such as vinyl amine; vinyl amide-based monomers such as N-vinyl formamide and N-vinyl acetamide; monomers having a carboxy group, such as acrylic acid, methacrylic acid, crotonic acid, maleic acid, fumaric acid, and itaconic acid; monomers having a sulfo group, such as vinyl sulfonic acid, methyl sulfonic acid, (meth)allylsulfonic acid, (meth)acrylic acid 2-sulfoethyl, 2-acrylamido-2-methylpropanesulfonic acid, and 3-allyloxy-2-hydroxypropanesulfonic acid; monomers having a phosphate group, such as 2-(meth)acryloyloxyethyl phosphate, methyl-2-(meth)acryloyloxyethyl phosphate, and ethyl-(meth)acryloyloxyethyl phosphate; acid group-containing monomers such as monomers having a hydroxyl group, such as 2-hydroxyethyl acrylate, 2-hydroxypropyl acrylate, 2-hydroxyethyl methacrylate, and 2-hydroxypropyl methacrylate; derivatives of (meth)acrylic acid, such as 2-hydroxyethyl methacrylate; (meth)acrylic acid ester monomers such as methyl acrylate, ethyl acrylate, methyl methacrylate, ethyl methacrylate, and 2-ethylhexyl acrylate; (meth)acrylamide monomers such as acrylamide and methacrylamide; fluorine-containing (meth)acrylate monomers such as 2-(perfluorohexyl)ethyl methacrylate and 2-(perfluorobutyl)ethyl acrylate; maleimide; maleimide derivatives such as phenylmaleimide; diene-based monomers such as 1,3-butadiene and isoprene; divinyl monomers such as divinylbenzene and allyl methacrylate; di(meth)acrylic acid ester monomers such as ethylene dimethacrylate, diethylene glycol dimethacrylate, ethylene glycol dimethacrylate (EDMA), diethylene glycol diacrylate, and 1,3-butylene glycol diacrylate; tri(meth)acrylic acid ester monomers such as trimethylolpropane trimethacrylate and trimethylolpropane triacrylate; epoxy group-containing ethylenically unsaturated monomers such as allyl glycidyl ether and glycidyl methacrylate; and γ-methacryloxypropyltrimethoxysilane.

The above-mentioned monomers may be used alone or two or more types thereof may be used in combination in an arbitrary ratio.

Herein, "(meta)acrylo" means acrylo and/or methacrylo, "(meth)acrylic" means acrylic and/or methacrylic, "(meth)allyl" means allyl and/or methallyl, and "(meth)acrylate" means acrylate and/or methacrylate.

The organic particles preferably comprise a (meth)acrylic acid ester monomer unit. The proportion of the (meth)acrylic acid ester monomer unit in the polymer forming the organic particles is not particularly limited and is preferably 1% by mass or more, more preferably 20% by mass or more, and even more preferably 30% by mass or more, but preferably 95% by mass or less, and more preferably 75% by mass or less.

The organic particles also preferably comprise an acid group-containing monomer unit, in particular a monomer unit having a carboxy group, such as a (meth)acrylic acid unit. The proportion of the acid group-containing monomer unit in the polymer forming the organic particles is not particularly limited and is preferably 0.1% by mass or more, and more preferably 0.5% by mass or more, but preferably 10% by mass or less, and more preferably 5% by mass or less.

The glass transition temperature of the organic particles is preferably 30°C or higher, and more preferably 50°C or higher, but preferably 90°C or lower, and more preferably 80°C or lower. When the glass transition temperature is not less than the above-described lower limit, the blocking resistance of the laminate for a non-aqueous secondary battery can be further increased. When the glass transition temperature is not greater than the above-described upper limit, the adhesive layer can exert a sufficient adhesion strength without having to be excessively heated.

When the organic particles have two or more glass transition temperatures, it is preferred that the lowest glass transition temperature falls within the range described above.

The organic particles are not particularly limited but preferably have a core-shell structure which includes a core and a shell partially covering the outer surface of the core. Herein, even when the outer surface of the core appears to be completely covered by the shell, if a through-pore is formed in the shell, such a shell is deemed as a shell partially covering the outer surface of the core. When the organic particles have a core-shell structure, the proportion of the nitrile group-containing monomer unit described above refers to a proportion in the total of the polymer constituting the core and the polymer constituting shell (i.e., the total polymer forming the organic particle).

The binder that can be used in combination with the organic particles is not particularly limited, and thermoplastic elastomers such as conjugated diene-based polymers and acrylic polymers can be used.

The conjugated diene-based polymer refers to a polymer that comprises a conjugated diene monomer unit, and specific examples thereof include polymers that comprise an aromatic vinyl monomer unit and an aliphatic conjugated diene monomer unit, such as styrene-butadiene copolymers (SBR). The acrylic polymer refers to a polymer that comprises a (meth)acrylic acid ester monomer unit.

The thickness of the adhesive layer provided on the surface on the one side of the substrate layer is not particularly limited and is preferably 0.01 µm or more, more preferably 0.05 µm or more, even more preferably 0.2 µm or more, and particularly preferably 0.4 µm or more, but preferably 10 µm or less, more preferably 5 µm or less, even more preferably 3 µm or less, and particularly preferably 1 µm or less, for example. When the thickness of the adhesive layer is not less than the above-mentioned lower limit, adhesion between the substrate layer and the adhesive layer can be sufficiently increased. When the thickness of the adhesive layer is not greater than the above-described upper limit, the blocking resistance of the laminate for a non-aqueous secondary battery can be further increased.

The adhesion strength of the adhesive layer to the substrate layer is preferably 1 N/m or more, and more preferably 3 N/m or more, but preferably 50 N/m or less, and more preferably 30 N/m or less. When the adhesion strength between the adhesive layer and the substrate layer is not less than adhesive the above-described lower limit, it is possible to ensure that the adhesive layer is retained on the substrate layer. On the other hand, when the adhesion strength between the adhesive layer and the substrate layer is not greater than the above-described upper limit, the adhesive layer can be easily peeled from the substrate layer, so that the transferability of the adhesive layer can be further increased.

The adhesion strength of the layer to the substrate layer can be determined as follows: An adhesive cellophane tape (specified in JIS Z1522) affixed to a horizontal test stage is attached to the surface on the other side of the substrate layer. The stress at the time when the adhesive layer of the laminate is peeled by pulling one end of the adhesive layer vertically upward at a pulling rate of 50 mm/min is measured three times, and an average of the measured stress values is calculated to determine the adhesion strength.

The adhesion strength of the adhesive layer to aluminum foil is preferably 5 N/m or more, and more preferably 10 N/m or more, but preferably 100 N/m or less, and more preferably 50 N/m or less. When the adhesion strength between the adhesive layer and aluminum foil is not less than the above-mentioned lower limit, the transferability of the adhesive layer can be further increased. On the other hand, when the adhesion strength between the adhesive layer and aluminum foil is not greater than the above-described upper limit, the blocking resistance of the laminate for a non-aqueous secondary battery can be further increased.

The adhesion strength of the adhesive layer to aluminum foil can be measured in accordance with the method described in Examples.

The adhesion strength between the adhesive layer and a substrate for a secondary battery (electrode substrate or separator substrate) may vary depending on the type and material of the substrate, but generally correlates to and approximates the adhesion strength between the adhesive layer and aluminum foil.

Thus, from the viewpoint of the transferability of the adhesive layer, in the laminate for a non-aqueous secondary battery, the adhesion strength described above between the adhesive layer and the substrate layer is preferably smaller than the adhesion strength between the adhesive layer and aluminum foil.

### <First Example of Use of Laminate for Nonaqueous Secondary Battery>

The disclosed laminate for a non-aqueous secondary battery described above can be used for example when obtaining a battery member (e.g., positive electrode, negative electrode, or separator) having an adhesive layer by providing an adhesive layer on a substrate such as an electrode substrate or a separator substrate. The battery member having an adhesive layer can then be suitably bonded to another battery member with the adhesive layer when assembling a secondary battery.

The battery member having an adhesive layer can be used when manufacturing a secondary battery using any known methods of manufacturing a non-aqueous secondary battery, such as that described in WO2016031163A.

Examples of substrates to be provided with the adhesive layer include separator substrates, and electrode substrates which include an electrode mixed material layer formed on a current collector. Separator substrates and electrode substrates may be those having a porous membrane layer on their surface.

Separator substrates are not particularly limited and a separator substrate described in JP2012204303A can be used, for example. Of these separator substrates, a microporous membrane made of polyolefinic (polyethylene, polypropylene, polybutene, or polyvinyl chloride) resin is preferred because such a membrane can reduce the total thickness of the separator, which in turns increases the ratio of electrode active material in the secondary battery and consequently increases the capacity per volume.

Electrode substrates (positive and negative electrode substrates) are not particularly limited and examples include those having an electrode mixed material layer formed on a current collector.

The current collectors, components in the electrode mixed material layers (e.g., electrode active materials (positive and negative electrode active materials), binders for the electrode mixed material layers (e.g., binders for positive and negative electrode mixed material layers)), and methods of forming the electrode mixed material layers on the current collectors can be those known in the art, such as those described in JP2013145763A.

Methods of transferring the adhesive layer from the substrate layer of the laminate for a non-aqueous secondary battery to the substrate described above are not particularly limited, and transfer methods known in the art can be used. Specifically, the adhesive layer can be transferred to the substrate for example by providing a laminate in which the laminate for a non-aqueous secondary battery and the substrate are stacked on top of each other such that the adhesive layer contacts a position of the substrate onto which the adhesive layer is desired to be transferred; pressing the laminate by mold pressing, roll pressing or other pressing techniques; and removing the substrate layer. The pressing conditions (e.g., pressure, temperature, and time) may be appropriately modified depending on, for example, the glass transition temperature of the polymer contained in the adhesive layer. By way of example, when roll pressing is used, the temperature of rolls may be appropriately adjusted in the range of 50°C to 200°C.

### <Second Example of Use of Laminate for Non-Aqueous Secondary Battery>

Without a particular limitation, the disclosed laminate for a non-aqueous secondary battery described above can also be disposed in an opposing portion where a portion of the positive electrode current collector, which portion is free of the positive electrode mixed material layer, and the negative electrode mixed material layer are opposed to each other. By disposing the laminate for a non-aqueous secondary battery in such an opposing portion, it is possible to prevent a short-circuit due, for example, to contamination with metals from occurring in the opposing portion, making it possible to increase the safety of a non-aqueous secondary battery.

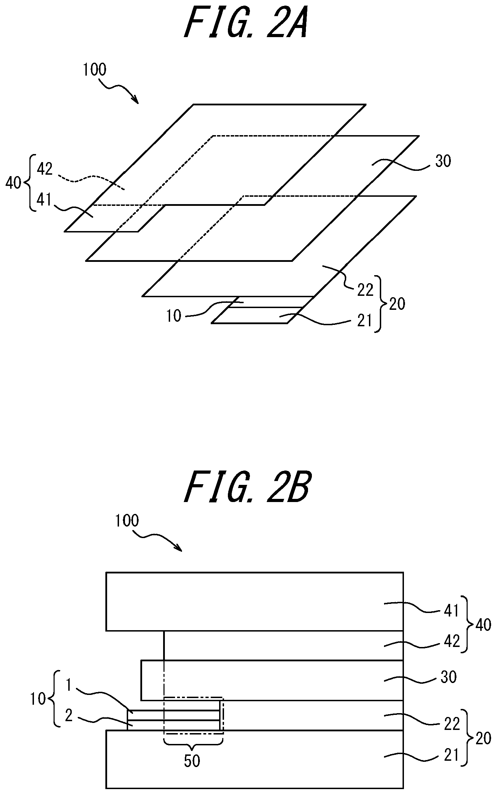

Specifically, the disclosed laminate for a non-aqueous secondary battery can be disposed in an opposing portion 50 of a structure 100 which is formed by stacking a positive electrode 20, a negative electrode 40 and a separator 30 with a predetermined positional relationship for example as shown in FIGS. 2A and 2B. The structure 100 shown in FIGS. 2A and 2B is formed by disposing the positive electrode 20 which includes a positive electrode current collector 21 and a positive electrode mixed material layer 22 formed on a part on the positive electrode current collector 21 (portion other than a tab-shaped portion in the illustrated example), and the negative electrode 40 which includes a negative electrode current collector 41 and a negative electrode mixed material layer 42 formed on the negative electrode current collector 41 (portion other than a tab-shaped portion in the illustrated example) such that the positive electrode mixed material layer 22 and the negative electrode mixed material layer 42 are opposed to each other via a current collector 30, and that an opposing portion 50 where a portion of the positive electrode current collector 21, which portion is free of the positive electrode mixed material layer 22, and a part of the negative electrode mixed material layer 52 are opposed to each other is present. The laminate 10 for a non-aqueous secondary battery according to the present disclosure is disposed in the opposing portion 50 (portion surrounded by a dash-dotted line in FIG. 2B). More specifically, the laminate 10 for a non-aqueous secondary battery is attached for example to the positive electrode current collector 21 of the positive electrode 20 via the adhesive layer 2 while having the substrate layer 1.

A non-aqueous secondary battery which includes a structure having the above-described configuration has excellent safety because a short-circuit in the opposing portion is prevented.

In the examples shown in FIGS. 2A and 2B, the positive and negative electrodes are shown having an electrode mixed material layer (positive or negative electrode mixed material layer) formed only on one side of the current collector. However, the electrode mixed material layer may be formed on both sides of the current collector. In the examples shown in FIGS. 2A and 2B, the laminate 10 for a non-aqueous secondary battery is shown attached only onto the positive electrode current collector 21. However, as long as the laminate 10 is disposed at least in the opposing portion 50, the laminate 10 for a non-aqueous secondary battery may be attached such that it extends from the surface of the positive electrode current collector 21 to the surface of the positive electrode mixed material layer 22 so as to cover the end surface on the opposing portion 50 side of the positive electrode mixed material layer 22.

A non-aqueous secondary battery which includes a structure having the above-described configuration can be manufactured for example by placing the structure in a battery container, injecting electrolyte solution into the battery container, and sealing the battery container. The battery container may include expanded metal; an overcurrent preventing device such as a fuse or a PTC device; and/or a lead plate as required to prevent pressure rises in the battery and/or prevent overcharging/discharging of the battery. The battery may be of any shape e.g., coin shape, button shape, sheet shape, cylindrical shape, polygonal shape, or flat shape.

### (Method of Manufacturing Laminate for Non-Aqueous Secondary Battery)

The disclosed method of manufacturing a non-aqueous secondary battery is used when manufacturing a laminate for a non-aqueous secondary battery which includes a non-porous substrate layer and an adhesive layer formed on a surface on one side of the substrate layer. The disclosed manufacturing method is characterized in that it uses a substrate layer whose surface on one side has a greater surface roughness than the surface on the other side, and that it includes the step of forming an adhesive layer on the surface on the one side of the substrate layer. When an adhesive layer is formed on the surface on one side of a substrate layer which has a greater surface roughness than the surface on the other side as described above, it is possible to easily obtain the disclosed laminate for a non-aqueous secondary battery described above.

The substrate layer and the adhesive layer used in the disclosed method of manufacturing a laminate for a non-aqueous secondary battery will not be described below because they can be those used for the disclosed laminate for a non-aqueous secondary battery described above.

Methods of forming the adhesive layer on the surface on one side of the substrate layer are not particularly limited, and examples include methods which involve the use of an adhesive layer composition which is obtained by dispersing or dissolving components which constitute the adhesive layer, such as the organic particles described above, in solvent such as water or organic solvent. Specifically, the adhesive layer can be formed on the surface on one side of the substrate layer for example by the following method 1) or 2):
1) An adhesive layer composition is applied on the surface on one side a substrate layer and dried; or
2) An adhesive layer composition is applied on a carrier member such as a flat plate or a roll and dried to form thereon an adhesive layer, and the adhesive layer is transferred onto the surface on one side of a substrate layer.

The method 1) is particularly preferred because the thickness of the adhesive layer can be easily controlled.

Methods of applying the adhesive layer composition used in the methods described above are not particularly limited. Application of the adhesive layer composition can be accomplished for example by spray coating, ink-jet coating, spin coating, doctor blading, reverse roll coating, direct roll coating, gravure coating, extrusion coating, or brush coating. Preferred is gravure coating, spray coating or ink-jet coating from the viewpoint of forming a thin adhesive layer.

Methods of drying the applied adhesive layer composition are not particularly limited and examples include drying methods using warm air, hot air or low humidity air, vacuum drying, and drying methods using infrared ray radiation or electron beams. The drying conditions are not particularly limited, but the drying temperature is preferably 30°C to 80°C and the drying time is preferably 30 seconds to 10 minutes.

The laminate for a non-aqueous secondary battery manufactured in the manner as described above is excellent in blocking resistance.

### EXAMPLES

The following provides a more specific description of the present disclosure based on Examples. However, the present disclosure is not limited to the following Examples. In the following description, "%" and "parts" used in expressing quantities are by mass, unless otherwise specified.

In a polymer produced by polymerizing two or more different monomers, unless otherwise stated, the ratios of monomer units in the polymer formed by polymerizing certain monomers are usually consistent with the ratios (charging ratios) of the certain monomers in the total monomers used for the polymerization of the polymer.

In Examples and Comparative Examples, the glass transition temperature of the organic particles, the surface roughness of the substrate layer, the thickness of the adhesive layer, the blocking resistance and adhesion strength of the laminate for a secondary battery, and the transferability of the adhesive layer were evaluated by the methods described below.

### <Glass Transition Temperature>

Using a monomer composition used for the preparation of the polymer for the core of organic particles, a water dispersion liquid containing a polymer as a measurement sample was prepared under polymerization conditions similar to those used for the polymerization of the polymer, and the water dispersion thus prepared was dried to prepare a measurement sample.

After weighing 10 mg of the measurement sample into an aluminum pan, measurement was performed in accordance with JIS K7121 in a temperature range of -100°C to 300°C at a heating rate of 10°C/min using a differential thermal analyzer ("EXSTAR DSC6220" manufactured by SII NanoTechnology Inc.) to generate a differential scanning calorimetry (DSC) curve. Note that an empty aluminum pan was used as a reference. In the heating process, an intersection point between the baseline immediately before a heat absorption peak on the DSC curve at which a derivative signal (DDSC) reached 0.05 mW/min/mg or more and a tangent to the DSC curve at a first inflection point after the heat absorption peak was determined as the glass transition temperature.

### <Surface Roughness>

For surfaces on both sides of the substrate layer, roughness curves at a magnification 100× were obtained at 25°C using a nanoscale hybrid microscope ("VN-8010" manufactured by Keyence Corporation), and their surface roughness was calculated in accordance with JIS B0601 (1994).

### <Thickness>

For three laminates for a secondary battery fabricated under the same conditions, the thickness at the center of each laminate was measured using a micrometer (manufactured by Mitutoyo Corporation) and an average value of the measurements was calculated. The thickness of the adhesive layer was then determined from the average value and the thickness of the substrate layer used.

### <Blocking Resistance>

The manufactured laminate for a secondary battery was cut to prepare 5 cm × 5 cm test pieces. The two test pieces obtained were placed on top of each other such that the surface on the adhesive layer side of one of the test pieces and the surface on the other side of the substrate layer of the other test piece were opposed to each other. Thereafter, the resulting laminate was placed under a pressure of 10 g/cm² at 40°C to prepare a measurement sample. The surface on one side of the sample consists of the substrate layer and the surface on the other side consists of the adhesive layer. The obtained sample was left to stand at 40°C under a pressure of 10 g/cm² for 24 hours and checked whether or not the two test pieces were bonded to each other.

Specifically, the sample after left to stand for 24 hours was affixed to an adhesive cellophane tape (specified in JIS Z1522) affixed to a horizontal test stage with the surface on the other side of the substrate layer located on the surface on the one side of the sample facing downward. The stress at the time when the test piece (laminate for a secondary battery) located on the surface on the one side of the sample is peeled by pulling one end of the test piece vertically upward at a pulling rate of 50 mm/min was measured three times, and an average value of the measured stress values was calculated and taken as the blocking resistance (adhesion strength) of the laminate for a secondary battery. Blocking resistance was evaluated based on the criteria given below. A smaller value of adhesion strength indicates better blocking resistance.
A: Test pieces are not bonded to each other and therefore adhesion strength cannot be measured.
B: Adhesion strength between test pieces is less than 0.1 N/m
C: Adhesion strength between test pieces is 0.1 N/m or more and less than 0.3 N/m
D: Adhesion strength between test pieces is 0.3 N/m or more

### <Transferability>

The fabricated laminate for a secondary battery was cut into a 100 mm × 10 mm rectangular piece to prepare a test piece. Also, the mass M0 of the substrate layer cut into a 100 mm × 10 mm rectangular piece was measured in advance.

The obtained test piece and a positive electrode were placed on top of each other such that the adhesive layer side of the test piece was opposed to the positive electrode mixed material layer side of the positive electrode, and pressed at 100°C under a linear pressure of 200 Kgf/cm for 1 minute. Transfer of the adhesive layer was then completed by pulling one end of the substrate layer of the obtained laminate (laminate comprising the substrate layer, the adhesive layer and the positive electrode in the order mentioned) vertically at a pulling rate of 50 mm/min to remove the substrate layer. The mass M1 of the substrate layer after transfer was then measured. Transferability was evaluated based on the criteria given below using a value obtained by dividing the mass M0 of the substrate layer by the mass M1 of the substrate layer after transfer and multiplying the obtained value by 100 (MO/M1 ratio in the unit of mass%). A larger MO/M1 ratio indicates a smaller mass of the adhesive layer remaining on the substrate layer after transfer and hence better transferability of the adhesive layer.

The positive electrode used was obtained by forming on a current collector made of aluminum foil ("1N99" manufactured by Nippon Foil Mfg. Co., Ltd.) a positive electrode mixed material layer which contains 100 parts of LiCoO₂ (volume average particle diameter D50: 12 µm) as a positive electrode active material, 2 parts of acetylene black ("HS-10" manufactured by Denka Company Limited) as a conductive material, and 2 parts of solids of polyvinylidene fluoride ("#7208" manufactured by KUREHA CORPORATION) as a particulate binder for the positive electrode mixed material layer.
A: MO/M1 ratio is 90 mass% or more
B: M0/M1 ratio is 80 mass% or more and less than 90 mass%
C: MO/M1 ratio is 60 mass% or more and less than 80 mass%
D: MO/M1 ratio is less than 60 mass%

### <Adhesion Strength>

The fabricated laminate for a secondary battery was positioned so that the adhesive layer was in contact with aluminum foil ("1N99" manufactured by Nippon Foil Mfg. Co., Ltd.). The laminate and aluminum foil were subjected to roll pressing at 80°C and a rate of 20 m/min under a linear pressure of 200 Kgf/cm so that the laminate and aluminum foil were bonded to each other. The resulting laminate with aluminum foil was cut into a 100 mm × 10 mm rectangular piece to prepare a test piece. The test piece was affixed to an adhesive cellophane tape (specified in JIS Z1522) affixed to a horizontal test stage with the aluminum foil facing downward. The stress at the time when the laminate is peeled by pulling one end of the laminate vertically upward at a pulling rate of 50 mm/min was measured. The measurement was made three times and an average of the measured stress values was calculated and taken as the adhesion strength between the laminate for a secondary battery and the aluminum foil. Adhesion strength was evaluated based on the criteria given below. A larger value of adhesion strength between the laminate for a secondary battery and aluminum foil indicates higher adhesion of the laminate.
A: Adhesion strength is 20 N/m or more
B: Adhesion strength is 10 N/m or more and less than 20 N/m
C: Adhesion strength is 5 N/m or more and less than 10 N/m
D: Adhesion strength is less than 5 N/m

### (Example 1)

### <Preparation of Organic Particles>

To a 5 MPa pressure-resistant vessel with a stirrer were added 43.5 parts of methyl methacrylate, 15 parts of butyl acrylate, 15 parts of acrylonitrile, 4 parts of methacrylic acid, 1 part of trimethylpropane triacrylate, 1 part of sodium dodecylbenzenesulfonate as an emulsifier, 150 parts of ion-exchanged water, and 0.5 parts of potassium persulfate as a polymerization initiator, as components for forming the core of organic particles. The mixture was sufficiently stirred and heated to 60°C to initiate polymerization. Once the polymerization conversion rate reached 96%, a mixture of 19 parts of styrene and 1 part of methacrylic acid was continuously added as components for forming the shell of organic particles and heated to 70°C to continue polymerization. Once the polymerization conversion rate of all the monomers added reached 96%, the reaction was quenched by cooling to afford a water dispersion liquid containing organic particles having a core-shell structure in which the outer surface of the core is partially covered with the shell. The glass transition temperature of the obtained organic particles was measured. The results are shown in Table 1.

### <Preparation of Binder>

To a reactor equipped with a stirrer were added 70 parts of ion-exchanged water, 0.15 parts of sodium lauryl sulfate ("EMAL 2F" manufactured by Kao Chemical Corporation) as an emulsifier, and 0.5 parts of ammonium persulfate as a polymerization initiator, and the gas phase was replaced with nitrogen gas and the temperature was raised to 60°C.

On the other hand, 50 parts of ion-exchanged water, 0.5 parts of sodium dodecylbenzenesulfonate as an emulsifier, and as monomers, 94 parts of butyl acrylate, 2 parts of acrylonitrile, 2 parts of methacrylic acid, 1 part of N-hydroxymethylacrylamide and 1 part of allylglycidyl ether were fed to another vessel and mixed to afford a monomer mixture. The resulting monomer mixture was continuously added to the reactor over a period of 4 hours for polymerization. During the addition of the monomer mixture, the polymerization reaction was continued at a temperature of 60°C. After the addition, the mixture was further stirred at 70°C for 3 hours to complete the polymerization reaction. In this way a water dispersion liquid containing an acrylic polymer as a binder was prepared.

### <Preparation of Adhesive Layer Composition>

100 parts of solids of the water dispersion liquid of organic particles and 22 parts of solids of the water dispersion liquid of binder were mixed in a stirring container to afford a mixture. Further, an ethylene oxide-propylene oxide copolymer as a surface tension modifier was added to the mixture in an amount of 1 part per 100 parts of the organic particles, and the mixture was diluted with ion-exchanged water to afford an adhesive layer composition having a solid content concentration of 15%.

### <Preparation of Substrate Layer>

As a resin film for use as the substrate layer, a biaxially oriented polypropylene (OPP) film having a melting point of 165°C and a thickness of 20 µm (matted on one side, Type D, manufactured by Kaisei Industries, Inc.) was provided. The surface roughness of surfaces on both sides of the resin film as the substrate layer was measured. The results are shown in Table 1.

### <Manufacture of Laminate for Non-Aqueous Secondary Battery>

The adhesive layer composition was applied onto the surface on one side of the substrate layer by gravure coating and dried at 50°C for 3 minutes to form an adhesive layer.

The obtained laminate for a secondary battery was used to measure or evaluate the thickness of the adhesive layer, the blocking resistance and adhesion strength of the laminate, and the transferability of the adhesive layer. The results are shown in Table 1.

### (Example 2)

Organic particles, a binder, an adhesive layer composition, a substrate layer, and a laminate for a non-aqueous secondary battery were prepared or provided in the same manner as in Example 1 except that the biaxially oriented polypropylene film having a thickness of 20 µm (matted on one side, Type D, manufactured by Kaisei Industries, Inc.) used in Example 1 as the substrate layer was replaced with a biaxially oriented polypropylene film having a thickness of 20 µm (matted on one side, Type S, manufactured by Kaisei Industries, Inc.). Measurements and evaluations were made in the same manner as in Example 1. The results are shown in Table 1.

### (Example 3)

Organic particles, a binder, an adhesive layer composition, a substrate layer, and a laminate for a non-aqueous secondary battery were prepared or provided in the same manner as in Example 1 except that that the biaxially oriented polypropylene film having a thickness of 20 µm (matted on one side, Type D, manufactured by Kaisei Industries, Inc.) used in Example 1 as the substrate layer was replaced with a resin film which is a biaxially oriented polypropylene film having a thickness of 20 µm (matted on one side, Type A, manufactured by Kaisei Industries, Inc.) whose matted surface had been subjected to blasting using a pencil-type blasting machine (petit blasting, suction type, manufactured by NICCHU CO., LTD.). Measurements and evaluations were made in the same manner as in Example 1. The results are shown in Table 1.

The surface roughness of the blasted surface was adjusted by modifying the particle diameter of blasting particles, blasting pressure, and blasting time.

### (Example 4)

Organic particles, a binder, an adhesive layer composition, a substrate layer, and a laminate for a non-aqueous secondary battery were prepared or provided in the same manner as in Example 1 except that the biaxially oriented polypropylene film having a thickness of 20 µm (matted on one side, Type D, manufactured by Kaisei Industries, Inc.) used in Example 1 as the substrate layer was replaced with a resin film which is a biaxially oriented polypropylene film having a thickness of 20 µm (matted on one side, Type D, manufactured by Kaisei Industries, Inc.) whose non-processed surface had been subjected to blasting using a pencil-type blasting machine (petit blasting, suction type, manufactured by NICCHU CO., LTD.). Measurements and evaluations were made in the same manner as in Example 1. The results are shown in Table 1.

The surface roughness of the blasted surface was adjusted by modifying the particle diameter of blasting particles, blasting pressure, and blasting time.

### (Example 5)

Organic particles, a binder, an adhesive layer composition, a substrate layer, and a laminate for a non-aqueous secondary battery were prepared or provided in the same manner as in Example 1 except that the thickness of the adhesive layer was set to 0.1 µm by changing the number of lines of a gravure roll used to apply the adhesive layer composition when manufacturing the laminate for a non-aqueous secondary battery. Measurements and evaluations were made in the same manner as in Example 1. The results are shown in Table 1.

### (Example 6)

Organic particles, a binder, an adhesive layer composition, a substrate layer, and a laminate for a non-aqueous secondary battery were prepared or provided in the same manner as in Example 1 except that the thickness of the adhesive layer was set to 4.0 µm by changing the number of lines of a gravure roll used to apply the adhesive layer composition when manufacturing the laminate for a non-aqueous secondary battery. Measurements and evaluations were made in the same manner as in Example 1. The results are shown in Table 1.

### (Example 7)

Organic particles, a binder, an adhesive layer composition, a substrate layer, and a laminate for a non-aqueous secondary battery were prepared or provided in the same manner as in Example 1 except that the amount of acrylonitrile for forming the core was changed to 3 parts and the amount of methyl methacrylate for forming the core was changed to 55.5 parts when preparing the organic particles. Measurements and evaluations were made in the same manner as in Example 1. The results are shown in Table 1.

### (Example 8)

Organic particles, a binder, an adhesive layer composition, a substrate layer, and a laminate for a non-aqueous secondary battery were prepared or provided in the same manner as in Example 1 except that the amount of acrylonitrile for forming the core was changed to 55 parts and the amount of methyl methacrylate for forming the core was changed to 3.5 parts when preparing the organic particles. Measurements and evaluations were made in the same manner as in Example 1. The results are shown in Table 1.

### (Comparative Example 1)

Organic particles, a binder, an adhesive layer composition, a substrate layer, and a laminate for a non-aqueous secondary battery were prepared or provided in the same manner as in Example 1 except that the biaxially oriented polypropylene film having a thickness of 20 µm (matted on one side, Type D, manufactured by Kaisei Industries, Inc.) used in Example 1 as the substrate layer was replaced with a biaxially oriented polypropylene film having a thickness of 20 µm (matted on both sides, with one side processed similarly to Type S and the other side processed similarly to Type D, manufactured by Kaisei Industries, Inc.). Measurements and evaluations were made in the same manner as in Example 1. The results are shown in Table 1.

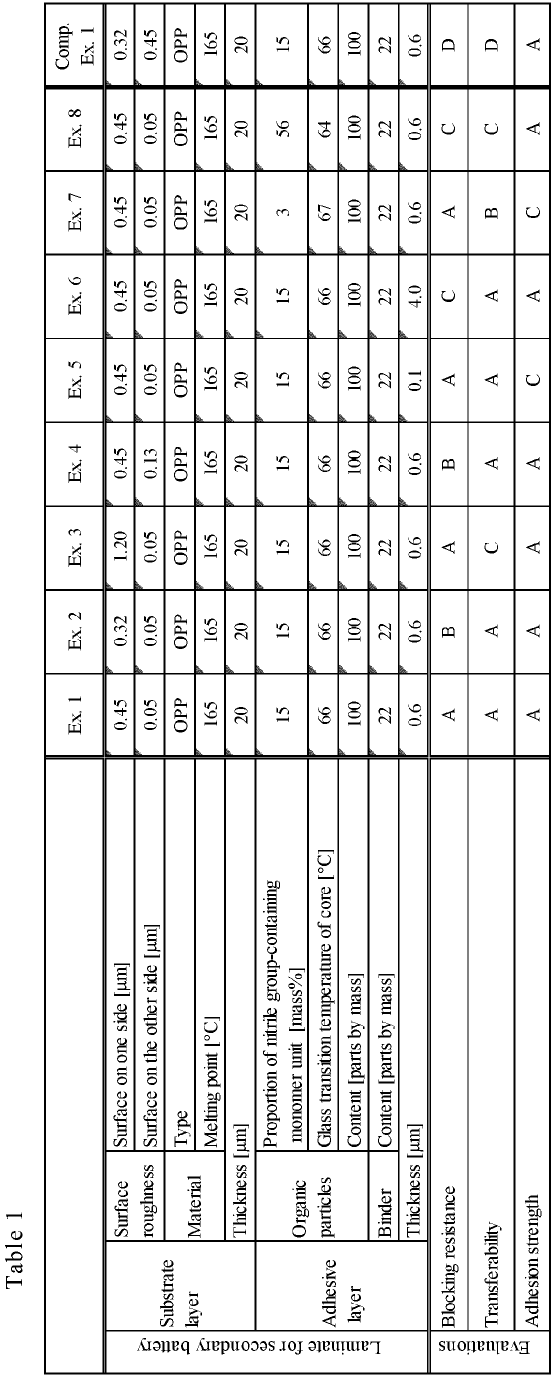

It can be seen from Table 1 that laminates for a non-aqueous secondary battery manufactured in Examples 1 to 8 may be prevented from undergoing blocking. On the other hand, it can be seen from Table 1 that the laminate for a non-aqueous secondary battery manufactured in Comparative Example 1, where the surface roughness of the surface on the other side is greater than the surface roughness of the surface on the one side with an adhesive layer, cannot be prevented from undergoing blocking.

### INDUSTRIAL APPLICABILITY

According to the present disclosure, it is possible to provide a laminate for a non-aqueous secondary battery which may be prevented from undergoing blocking, and a non-aqueous secondary battery which includes the laminate for a non-aqueous secondary battery.

### REFERENCE SIGNS LIST

- 1: Substrate layer
- 1A, 1B: surface
- 2: Adhesive layer
- 10: Laminate for non-aqueous secondary battery
- 20: Positive electrode
- 21: Positive electrode current collector
- 22: Positive electrode mixed material layer
- 30: Separator
- 40: Negative electrode
- 41: Negative electrode current collector
- 42: Negative electrode mixed material layer
- 50: Opposing portion
- 100: Structure

## Claims

1. A laminate for a non-aqueous secondary battery, comprising:
a non-porous substrate layer; and
an adhesive layer formed on a surface on one side of the substrate layer,
wherein a surface roughness of the surface on the one side of the substrate layer is greater than a surface roughness of a surface on the other side of the substrate layer.

2. The laminate for a non-aqueous secondary battery of claim 1, wherein
the surface roughness of the surface on the one side of the substrate layer is 0.20 µm or more and 2.00 µm or less.

3. The laminate for a non-aqueous secondary battery of claim 1 or 2, wherein
the surface roughness of the surface on the other side of the substrate layer is 0.01 µm or more and 0.15 µm or less.

4. The laminate for a non-aqueous secondary battery of any one of claims 1 to 3,
wherein the adhesive layer comprises organic particles, and
the organic particles are made of a polymer which comprises 1% by mass or more and 70% by mass or less of a nitrile group-containing monomer unit.

5. The laminate for a non-aqueous secondary battery of any one of claims 1 to 4, wherein
the adhesive layer has a thickness of 0.01 µm or more and 10.0 µm or less.

6. A non-aqueous secondary battery, comprising:
a structure wherein a positive electrode which includes a positive electrode current collector and a positive electrode mixed material layer formed on a part of the positive electrode current collector and a negative electrode which includes a negative electrode current collector and a negative electrode mixed material layer formed on the negative electrode current collector are disposed such that the positive electrode mixed material layer and the negative electrode mixed material layer are opposed to each other via a separator and such that an opposing portion where a portion of the positive electrode current collector, which portion is free of the positive electrode mixed material layer, and the negative electrode mixed material layer are opposed to each other is present, wherein
the laminate for a non-aqueous secondary battery of any one of claims 1 to 5 is disposed in the opposing portion.

7. A method of manufacturing a laminate for a non-aqueous secondary battery, the laminate including a non-porous substrate layer and an adhesive layer formed on a surface on one side of the substrate layer, wherein
a surface roughness of the surface on the one side of the substrate layer is greater than a surface roughness of a surface on the other side of the substrate layer, and
the method comprises a step of forming the adhesive layer on the surface on the one side of the substrate layer.

8. The method of manufacturing a laminate for a non-aqueous secondary battery of claim 7, wherein
the step includes applying an adhesive layer composition on the surface on the one side of the substrate layer and drying the adhesive layer composition to form an adhesive layer.
